# FASCICULE DE BREVET EUROPEEN

(11) **EP 4 074 450 B1**
(45) Date de publication et mention de la délivrance du brevet: **31.01.2024**
(21) Numéro de dépôt: 22167595.2
(22) Date de dépôt: 11.04.2022
(51) Int. Cl.: B23K 9/173, B23K 9/095, B23K 9/12

(54) **PROCÉDÉ DE DÉTECTION D'UNE LONGUEUR DE FIL DE SOUDAGE PAR TRAITEMENT D'IMAGES, ET MÉMOIRE CORRESPONDANTE COMPRENANT DES INSTRUCTIONS POUR METTRE EN OEUVRE UN TEL PROCÉDÉ**
VERFAHREN ZUR ERKENNUNG EINER SCHWEISSDRAHTLÄNGE DURCH BILDVERARBEITUNG, UND ENTSPRECHENDER SPEICHER MIT ANWEISUNGEN ZUR DURCHFÜHRUNG SOLCHES PROZESSES
METHOD OF DETECTING A LENGTH OF FEEDWIRE BY IMAGE PROCESSING, AND CORRESPONDING MEMORY COMPRISING INSTRUCTIONS FOR IMPLEMENTING SUCH PROCESS

(30) Priorité: 16.04.2021 FR 2103939
(43) Date de publication de la demande: 19.10.2022
(73) Titulaire: Weez-U Welding, 44000 Nantes (FR)
(72) Inventeur: SEBSADJI, Yazid, 49000 Angers (FR)
(74) Mandataire: Marconnet, Sébastien

(56) Documents cités:
- CN-A- 110 773 862
- JP-A- 2007 181 871
- M. S. MCGOUGH ET AL: "VISUAL MONITORING OF REMOTE WELDING OPERATIONS", WELDING JOURNAL, AMERICAN WELDING SOCIETY, MIAMI, FL, US, vol. 69, no. 12, 1 décembre 1990 (1990-12-01), pages 23-28, XP000174149, ISSN: 0043-2296

## Description

La présente invention porte sur un procédé de détection d'une longueur de fil de soudage par traitement d'image et d'une mémoire stockant des instructions logicielles pour la mise en oeuvre de ce procédé, voir les revendications 1 et 12.

La soudure consiste à former une continuité au niveau atomique entre deux pièces métalliques par apport d'énergie et éventuellement apport de matière.

Les procédés de soudage utilisant la fusion pour des matériaux métalliques sont nombreux (MIG (pour "Métal Inert Gas" en anglais), MAG (pour "Métal Active Gas" en anglais), TIG (pour "Tungsten Inert Gas" en anglais), Laser, Hybride, sous flux, ou autre) et dépendent de trois caractéristiques principales :
- le moyen d'apport de la chaleur: électrode fusible (MIG, MAG), électrode infusible (TIG), Laser, ou autre,
- le mode d'apport de matériau: fil conjoint avec la chaleur (MIG, MAG), baguette disjointe de l'apport de chaleur (TIG), l'absence d'apport de matériau, et
- le mode de protection de la soudure: la période transitoire de fusion rend les métaux sensibles à la pollution de sorte que le bain de fusion doit être protégé, par exemple par un gaz inerte, un gaz actif, ou un flux.

**A**
La soudure automatisée est effective dans des conditions où les pièces à souder sont parfaitement connues et répétables sans variabilité. Les robots peuvent alors exécuter des trajectoires préprogrammées et des réglages fixes et obtenir des soudures de qualité.
**A** Le document JP2007181871A (base pour le préambule de la revendication 1) décrit un système de soudage comportant un appareil d'acquisition d'images pour obtenir des images du fil et de l'arc; un moyen de traitement d'images pour extraire une longueur de saillie du fil par traitement d'images et un moyen de commande pour suivre verticalement une rainure en commandant la longueur de saillie extraite du fil de manière à la maintenir constante. Le procédé de détection d'une extrémité du fil mis en oeuvre par ce système est basé sur une binarisation de l'image en deux zones (claire ou sombre).
Le document CN11 0773862A décrit un procédé de soudage par remplissage de fil au laser, un dispositif de commande de soudage par remplissage de fil au laser, un équipement de soudage par remplissage de fil au laser et un matériau de stockage. Suivant ce procédé, une image prise par une caméra et comprenant l'extrémité d'un fil de soudage jusqu'à une position à laquelle le fil de soudage est en contact avec un dispositif d'alimentation en fil est acquise. La distance entre l'extrémité du fil de soudure et la position à laquelle le fil de soudure est en contact avec le dispositif d'alimentation en fil est calculée par traitement d'images. La longueur du fil de soudure est comparée à une plage de longueur prédéfinie. Si la longueur du fil de soudure n'est pas dans la plage de longueur prédéfinie, le dispositif d'alimentation en fil est commandé pour ajuster la longueur du fil de soudure.

Toutefois, dans de nombreuses applications, ces conditions ne sont pas réunies notamment pour les raisons suivantes:
- les pièces à souder ne sont pas identiques les unes aux autres,
- le positionnement des pièces les unes par rapport aux autres n'est pas identique,
   - les pièces à souder ne sont pas conformes à leur géométrie théorique et présentent des déformations aléatoires,
   - les jeux entre pièces à souder sont variables.

Le procédé de soudage étant extrêmement sensible à ces variabilités, l'exécution d'une trajectoire préprogrammée générerait de façon certaine des défauts de soudure. Il est alors indispensable de mettre en place des méthodes permettant de modifier la trajectoire pour tenir compte des variabilités des pièces et de la réalité du bain de soudage tel qu'il se met en place au fur et à mesure de l'opération de soudage.

Un paramètre important est la distance entre la pièce et la torche de soudage. Ce paramètre est corrélé avec la longueur de fil de soudage libre. Lorsque cette distance augmente, la longueur de fil augmente également, entraînant la réduction de l'intensité de l'arc électrique et l'augmentation de la tension. La forme du bain de fusion évolue et le risque des défauts de fusion du métal de base (manque de fusion aussi appelé collage dans les ateliers) devient très élevé.

Lorsque la distance entre la pièce et la torche de soudage diminue, la longueur de fil diminue, entraînant l'augmentation de l'intensité électrique. L'énergie locale de soudage augmente au risque d'endommager les matériaux support et la qualité de la soudure. Le bain de soudage devient très compact et prend des géométries "roulées" constituant des défauts.

La présente invention vise à détecter à tout moment pendant le processus de soudage la longueur du fil de soudage dépassant de la buse de soudage. Il sera ainsi possible d'adapter en temps réel manuellement ou de façon automatique le processus de soudage en fonction de cette variable.

A cet effet, l'invention a pour objet un procédé de détection d'une longueur de fil de soudage dépassant d'une buse de soudage appartenant à une torche de soudage tel que défini dans la revendication 1, en outre des moyens pour générer un arc de soudage de façon à créer un bain de soudage, une caméra étant apte à capter des images d'un ensemble formé par la buse de soudage, le fil de soudage, l'arc de soudage, et le bain de soudage, ledit procédé comportant:
- une étape de détection par traitement d'images d'une extrémité libre du fil de soudage,
- une étape de détection par traitement d'images de la buse de soudage, et
- une étape de calcul d'une longueur du fil de soudage dépassant de la buse de soudage par un calcul de distance euclidienne entre l'extrémité du fil de soudage et la buse de soudage.

De plus, selon l'invention, l'étape de détection de l'extrémité libre du fil de soudage comporte:
- une étape de détection d'une région la plus lumineuse dans une image de l'ensemble en détectant des pixels de ladite image de l'ensemble dont une intensité est la plus forte,
- une étape de définition d'une zone de recherche du fil de soudage,
- une étape de détection du fil de soudage par seuillage local dans la zone de recherche,
- une étape de détection de l'extrémité libre dans le fil de soudage précédemment détecté.

Selon une mise en oeuvre de l'invention, ledit procédé comporte une étape préalable de rotation d'une image de l'ensemble précité, de telle sorte qu'une direction de la buse de soudage et du fil de soudage est sensiblement verticale.

Selon une mise en oeuvre de l'invention, ledit procédé comporte en outre une étape préalable d'atténuation d'un bruit de capteur de la caméra et d'effets de projections métalliques.

Selon une mise en oeuvre de l'invention, l'étape de détection de la buse de soudage comporte:
- une étape de calcul d'un gradient de l'image selon un axe de façon à mettre en évidence de fortes variations de l'intensité de pixels selon cet axe,
- une étape de détection d'un bord inférieur de la buse de soudage correspondant à une zone la plus lumineuse de l'image résultant du calcul du gradient, et
- une étape de détection de la buse de soudage à partir du bord inférieur de la buse de soudage.

Selon une mise en oeuvre de l'invention, ledit procédé comporte une étape préalable de rotation d'une image de l'ensemble, de telle sorte qu'une direction de la buse de soudage et du fil de soudage est sensiblement verticale.

Selon une mise en oeuvre de l'invention, ledit procédé comporte une étape préalable d'atténuation d'un bruit de capteur de la caméra et d'effets de projections métalliques.

L'invention a également pour objet un procédé de commande d'un système de soudage à bras robotisé tel que défini dans la revendication 7, comportant les étapes du procédé de détection d'une longueur de fil de soudage tel que précédemment défini.

Selon une mise en oeuvre de l'invention, ledit procédé comporte en outre une étape d'affichage sur un écran d'une information relative à la longueur de fil de soudage détectée.

Selon une mise en oeuvre de l'invention, ledit procédé comporte une étape d'enregistrement dans une mémoire d'une information relative à la longueur de fil de soudage détectée au cours d'une opération de soudage.

Selon une mise en oeuvre de l'invention, ledit procédé comporte une étape de comparaison de la longueur du fil de soudage détectée avec une valeur seuil minimale et/ou une valeur seuil maximale et une étape d'alerte dans le cas où la valeur de la longueur du fil de soudage devient inférieure à la valeur seuil minimale ou supérieure à la valeur seuil maximale.

Selon une mise en oeuvre de l'invention, ledit procédé comporte une étape de pilotage du système de soudage en asservissement par rapport à la longueur de fil de soudage détectée de façon à maintenir constante une longueur de fil de soudage tout au long d'une opération de soudage.

L'invention concerne en outre une mémoire stockant des instructions logicielles pour la mise en oeuvre du procédé de détection d'une longueur de fil de soudage tel que précédemment défini, voir la revendication 12.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1a] La figure 1a est une représentation schématique d'un système de soudage selon la présente invention;
[Fig. 1b] La figure 1b est une représentation schématique d'un positionnement possible d'une caméra du système de soudage selon l'invention par rapport à la buse de soudage;
[Fig. 2] La figure 2 montre une image captée par une caméra située à proximité d'une torche de soudage;
[Fig. 3] La figure 3 est un diagramme des étapes principales du procédé de détection d'une longueur de fil de soudage par traitement d'image;
[Fig. 4a] [Fig. 4e] Les figures 4a à 4e illustrent les différentes étapes de traitement d'image permettant de détecter l'extrémité du fil de soudage;
[Fig. 5a] [Fig. 5e] Les figures 5a à 5e illustrent les différentes étapes de traitement d'image permettant de détecter une extrémité de la torche de soudage.

Les éléments identiques, similaires, ou analogues conservent la même référence d'une figure à l'autre.

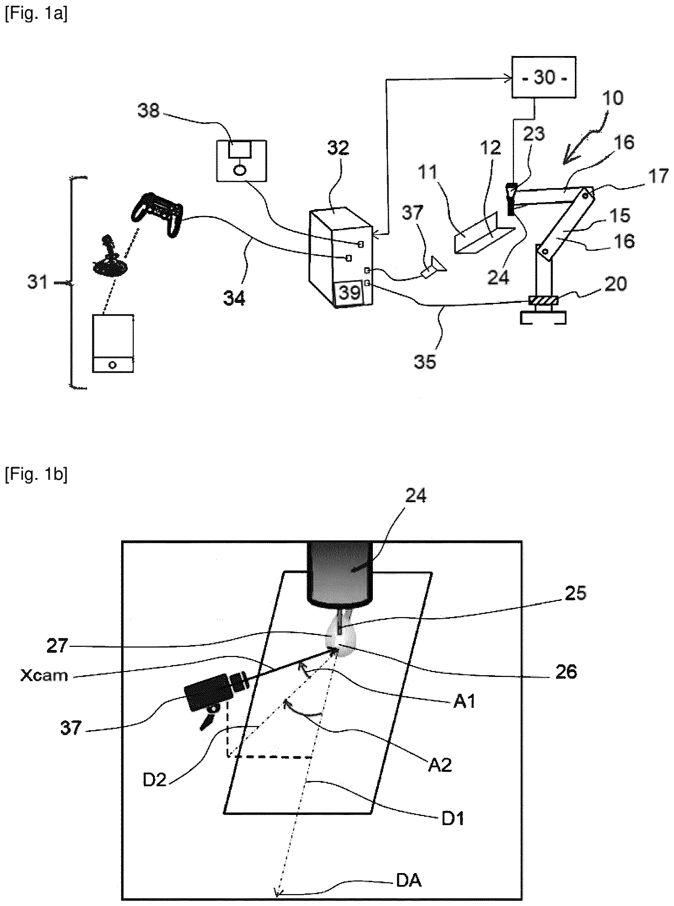

La figure 1a montre un système de soudage 10 permettant à un opérateur d'effectuer à distance des opérations de soudage entre deux pièces 11, 12. A cet effet, le système de soudage 10 comporte un dispositif robotisé 15 pouvant prendre la forme d'un bras robotisé ou d'un robot cartésien ou de tout autre dispositif muni d'actionneurs apte à déplacer une torche de soudage 23 pour effectuer une opération de soudage. Les actionneurs du dispositif robotisé 15 pourront être montés mécaniquement en série ou en parallèle les uns par rapport aux autres.

Le bras robotisé 15 pourra être muni de plusieurs parties 16 mobiles en rotation les unes par rapport aux autres via des articulations 17, prenant par exemple la forme de liaisons pivots ou de liaisons rotules. Des actionneurs permettent le déplacement du bras robotisé 15 dans au moins une dimension de l'espace, notamment deux ou trois dimensions de l'espace. En variante, la torche de soudage 23 pourra être fixe tandis que les pièces à souder sont mobiles par rapport à la torche de soudage 23.

Le bras robotisé 15 porte à son extrémité la torche de soudage 23 qui pourra par exemple assurer un soudage avec apport de matière de type MIG (pour "Métal Inert Gas" en anglais) ou de type MAG (pour "Metal Active Gas" en anglais).

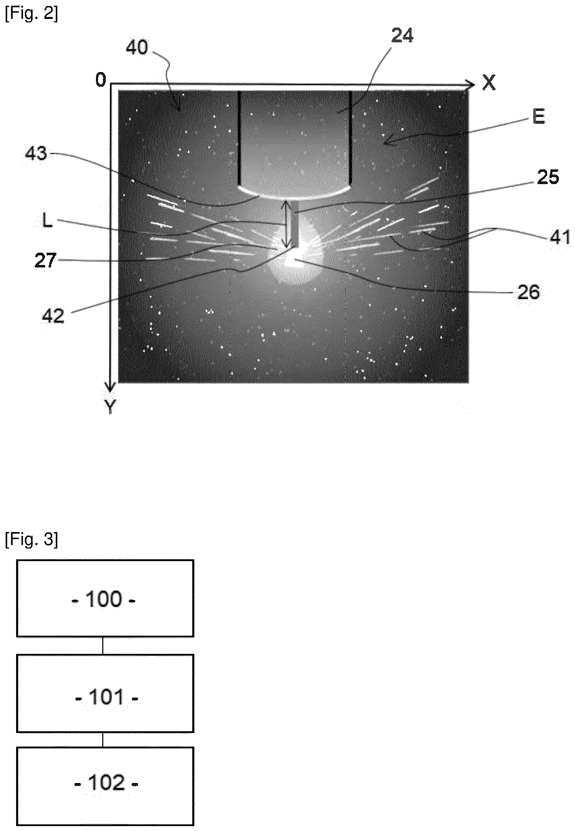

La torche de soudage 23 comporte une buse de soudage 24 protégeant un tube (non représenté) destiné à acheminer un courant vers un fil de soudage 25, tel que cela est visible sur la figure 2. La buse de soudage 24 assure également le guidage d'un gaz de soudage vers deux électrodes de soudage permettant de générer un arc de soudage 26 du fait de la différence de tension entre les électrodes.

Une première électrode est constituée par le fil de soudage 25 qui est une électrode fusible. Une deuxième électrode est constituée par une pièce à souder 11, 12.

La torche de soudage 23 permet de créer un bain de soudage 27 constitué notamment d'un mélange de matériau fondu issu du fil de soudage 25 et des pièces à souder 11, 12.

Les paramètres de soudage (intensité, tension appliquée) sont contrôlables grâce à un générateur de soudage 30.

Une interface homme-machine 31 est apte à générer un flux d'instructions de déplacement du bras robotisé 15 correspondant à des actions d'un opérateur. L'interface homme-machine 31 peut ainsi générer des instructions reflétant en temps réel les actions de l'opérateur humain. L'interface homme-machine 31 pourra prendre la forme d'une tablette numérique, d'un joystick, d'une manette, d'une souris, d'un trackball, d'un clavier, ou tout autre moyen de pilotage adapté à l'application.

Un système de commande 32 est apte à recevoir le flux d'instructions de déplacement issues de l'interface homme-machine 31 et à commander le bras robotisé 15 en fonction du flux d'instructions de déplacement reçues. Le système de commande 32 pourra notamment prendre la forme d'un ordinateur ou d'un serveur.

L'interface homme-machine 31 est reliée au système de commande 32 par l'intermédiaire d'une liaison de communication 34 de type filaire, par exemple une liaison de type USB. En variante, la liaison de communication 34 entre le système de commande 32 et l'interface homme-machine 31 est une liaison sans-fil, notamment de type radio-fréquence, comme par exemple une liaison de type WIFI ou Bluetooth. Alternativement, le système de commande 32 pourra être physiquement embarqué dans l'interface homme-machine 31.

Le bras robotisé 15 est relié au système de commande 32 par l'intermédiaire d'une liaison de communication 35 de type filaire, par exemple de type Ethernet. En variante, la liaison de communication 35 entre le système de commande 32 et le bras robotisé 15 est une liaison sans-fil, notamment de type radio-fréquence, comme par exemple une liaison de type WIFI ou Bluetooth.

Le système 10 comporte en outre une caméra 37 disposée à proximité d'un cordon de soudage correspondant à la zone de jonction par soudage entre les deux pièces 11 et 12. La caméra 37 présente un axe optique Xcam.

Comme cela est illustré sur la figure 1b, on définit :
- une direction DA de l'avance du cordon de soudage,
- une droite D1 tangente du cordon de soudage à une position d'une extrémité libre du fil de soudage 25,
- une droite D2 correspondant à une projection orthogonale de l'axe optique Xcam de la caméra 37 sur un plan défini par la direction DA de l'avance du cordon de soudage et dont le roulis est nul. L'origine de ce plan est l'extrémité libre du fil de soudage 25.

Avantageusement, un angle A1 formé par l'axe optique Xcam de la caméra 37 et la droite D2 de projection orthogonale de l'axe optique Xcam est compris entre -90 degrés et +90 degrés. Un angle A2 formé par la direction DA de l'avance du cordon de soudage et la droite D2 de projection orthogonale de l'axe optique Xcam est compris entre -90 degrés et +90 degrés.

Un tel positionnement de la caméra 37 n'est toutefois pas indispensable. Le positionnement de la caméra 37 pourra donc varier en fonction de l'application.

Un écran de contrôle 38 affiche une image captée par la caméra 37.

Le bras robotisé 15 met en oeuvre un procédé de détection par traitement d'images d'une longueur L de fil de soudage 25 dépassant de la buse de soudage 24. A cet effet, le système de commande 32 pourra comporter une mémoire 39 stockant des instructions logicielles pour la mise en oeuvre du procédé selon l'invention.

Comme cela est illustré par la figure 3, ce procédé comporte une étape 100 de détection, par traitement d'images, d'une extrémité libre 42 du fil de soudage 25 la plus éloignée d'une extrémité de la buse de soudage 24, une étape 101 de détection par traitement d'images de la buse de soudage 24, et une étape 102 de calcul d'une longueur L du fil de soudage 25 par un calcul de distance euclidienne entre l'extrémité libre 42 du fil de soudage 25 et la buse de soudage 24, notamment entre l'extrémité libre 42 du fil de soudage 25 et un bord d'extrémité de la buse de soudage 24. La longueur L du fil pourra par exemple être exprimée en pixels avant d'être transformée dans une unité de longueur du système internationale (USI).

On détaille ci-après les différentes étapes de traitement d'images permettant de détecter l'extrémité libre 42 du fil de soudage 25.

Le traitement d'images est effectué sur les images 40 captées par la caméra 37 de l'ensemble E formé par la buse de soudage 24, le fil de soudage 25, l'arc de soudage 26, et le bain de soudage 27, tel que cela est représenté sur la figure 2. On définit dans une image 40 un axe X horizontal et un axe Y vertical de façon à pouvoir localiser les différents pixels de l'image.

La torche de soudage 23 étant généralement inclinée par rapport à la verticale pour effectuer une soudure, le procédé comporte une étape préalable de rotation d'une image de l'ensemble E, de telle sorte que la direction de la buse de soudage 24 et du fil de soudage 25 soit sensiblement verticale du haut de l'image vers le bas tel que cela est représenté sur la figure 2. Cela permet de simplifier l'algorithme de détection de l'extrémité libre 42 du fil de soudage 25. Par "sensiblement verticale", on entend une direction pouvant faire un angle de plus ou moins 10 degrés par rapport à la verticale.

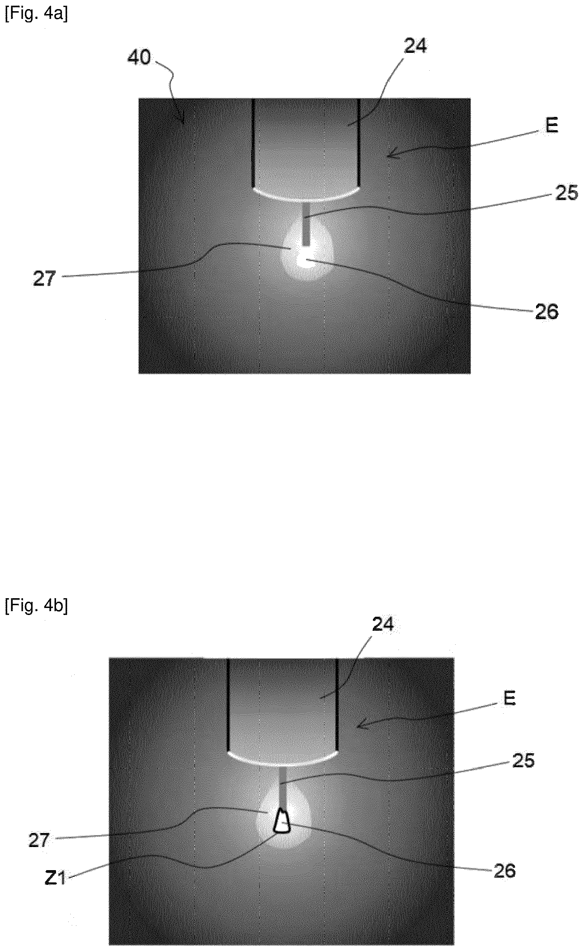

Le procédé comporte en outre une étape d'atténuation d'un bruit de capteur de la caméra 37 et d'effets de projections métalliques 41 générées par l'opération de soudage. A cet effet, on utilise des filtres moyenneurs de traitement d'images permettant de déterminer une moyenne mobile des images 40 captées par la caméra 37. On obtient alors l'image de la figure 4a. Toute autre méthode adaptée à l'application est envisageable.

Comme cela est illustré par la figure 4b, on détecte ensuite la zone Z1 la plus lumineuse dans l'image de l'ensemble E en détectant des pixels de l'image de l'ensemble E dont l'intensité est la plus forte. A cet effet, on utilise un histogramme de l'image de la figure 4a pour déterminer un seuil qui permet de séparer les points les plus lumineux dans l'image. Ces pixels correspondent à l'arc de soudage 26 qui est la principale source de lumière pendant l'opération de soudage.

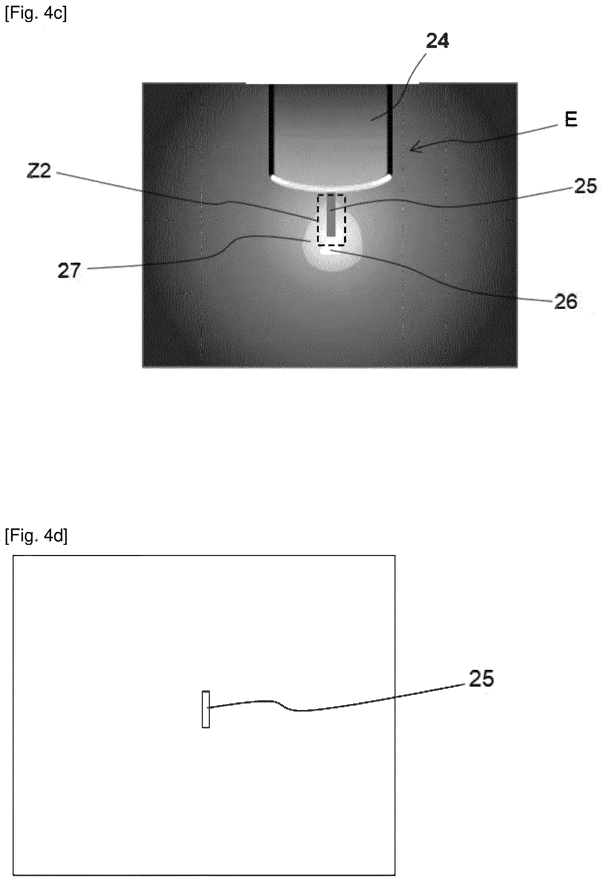

Comme cela est illustré par la figure 4c, on définit une zone de recherche Z2 du fil de soudage 25. Cette zone de recherche Z2 est définie par le voisinage de la zone Z1 de l'arc de soudage 26 qui est décalée vers le haut étant donné que le fil de soudage 25 se trouve nécessairement au-dessus de l'arc de soudage 26.

Comme cela est illustré par la figure 4d, et conformément à la présente invention, on détecte le fil de soudage 25 par seuillage local dans la zone de recherche Z2. Suivant cette étape, l'ensemble des pixels de la zone de recherche Z2 sont candidats. Les pixels qui sont retenus sont ceux dont l'intensité est plus faible que ses voisins, en particulier ses pixels voisins à gauche et à droite sur l'image. En effet, d'un point de vue de l'angle d'acquisition des images, le fil de soudage 25 se positionne devant le bain de soudage 27 qui est beaucoup plus lumineux par rapport au fil de soudage 25, et génère un effet de contre-jour.

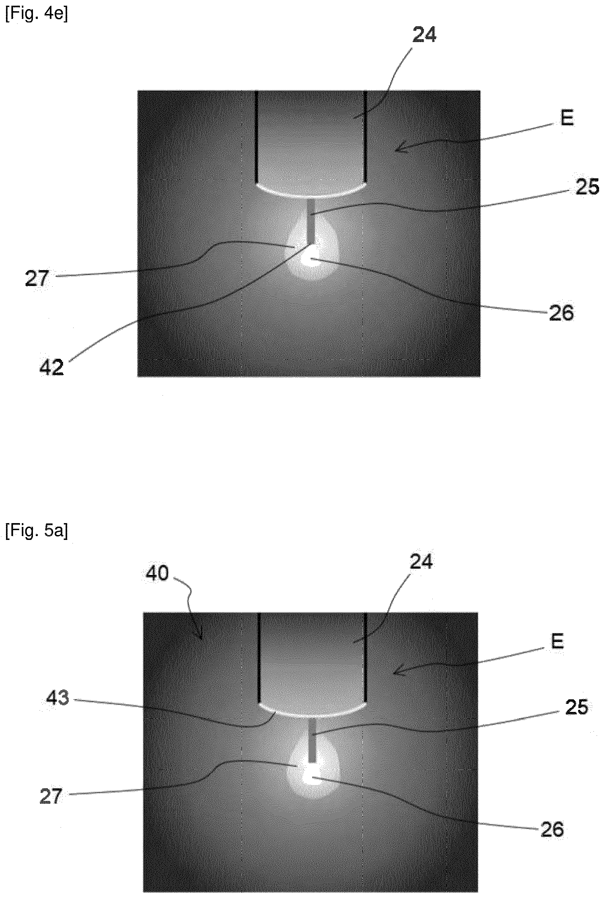

On détecte ensuite l'extrémité libre 42 du fil de soudage 25 à l'intérieur du fil de soudage 25 précédemment détecté, tel que cela est illustré par la figure 4e. Cette extrémité libre 42 correspond au point le plus bas du résultat de la détection du fil de soudage 25.

On détaille ci-après les différentes étapes de traitement d'images permettant de détecter la buse de soudage 24.

Cette détection est basée sur le fait qu'un bord inférieur 43 de la buse de soudage 24 est plus exposé à la lumière émise par l'arc de soudage 26 que le reste de la buse de soudage 24. En effet, le bord inférieur 43 de la buse de soudage 24 est face à l'arc de soudage 26 tandis que le reste de la buse de soudage 24 reçoit peu de lumière de l'arc de soudage 26.

Le traitement d'images est effectué sur les images captées par la caméra 37 de l'ensemble E formé par la buse de soudage 24, le fil de soudage 25, l'arc de soudage 26, et le bain de soudage 27, tel que cela est représenté sur la figure 2. On définit dans cette image un axe X horizontal et un axe Y vertical de façon à pouvoir localiser les différents pixels de l'image.

Plus précisément, comme précédemment, le procédé comporte une étape de rotation d'une image de l'ensemble E, de telle sorte que la direction de la buse de soudage 24 et du fil de soudage 25 soit sensiblement verticale du haut de l'image vers le bas. Cela permet de simplifier l'algorithme de détection de la buse de soudage 24.

Le procédé comporte en outre une étape d'atténuation d'un bruit de capteur de la caméra 37 et d'effets de projections métalliques 41 générées par l'opération de soudage. A cet effet, on utilise des filtres moyenneurs de traitement d'images permettant de déterminer une moyenne mobile des images captées par la caméra 37. On obtient alors l'image de la figure 5a. Toute autre méthode adaptée à l'application est envisageable.

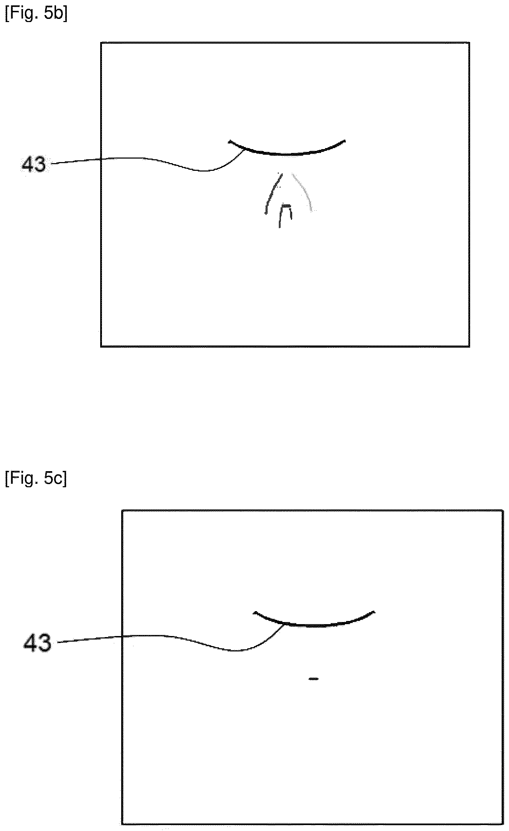

On calcule ensuite un gradient de l'image selon l'axe Y de façon à mettre en évidence de fortes variations de l'intensité des pixels selon cet axe Y. Le résultat de ce calcul de gradient est illustré par la figure 5b. Suivant un exemple de mise en oeuvre, le gradient de Sobel est utilisé. Toutefois, en variante, d'autres méthodes de calcul de gradients pourront être utilisées. En variante, le gradient de l'image pourra être calculé suivant un axe différent de l'axe vertical Y, notamment un axe de la torche dans le cas où l'étape de rotation ne serait pas mise en oeuvre.

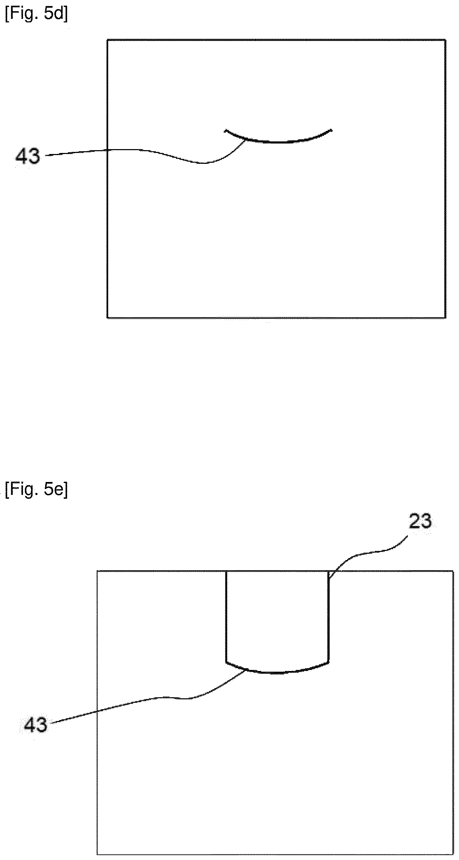

On détecte ensuite le bord inférieur 43 de la buse de soudage 24 correspondant à une zone la plus lumineuse de l'image résultant du calcul du gradient. A cet effet, on met en oeuvre un seuillage dont le résultat est montré sur la figure 5c. Le résultat de la détection du bord inférieur 43 de la buse de soudage 24 est montré sur la figure 5d.

On effectue si besoin une étape de lissage de l'image en utilisant par exemple une approximation à un polynôme de deuxième degré par la méthode des moindres carrés. Toute autre méthode adaptée à l'application est envisageable.

La buse de soudage 24 est ensuite détectée à partir du bord inférieur 43 de la buse de soudage 24. A cet effet, comme cela est illustré par la figure 5e, les deux côtés de la buse de soudage 24 sont obtenus par le prolongement de deux extrémités du bord inférieur 43 de la buse de soudage 24 précédemment détectée, selon l'axe du fil de soudage 25 pour une forme cylindrique de la buse 24. La forme du prolongement pourra bien entendu être adaptée en fonction de la géométrie de la buse de soudage 24.

L'invention a également pour objet un procédé de commande du système de soudage 10 à bras robotisé dont la longueur L du fil de soudage 25 dépassant de la buse de soudage 24 varie au cours d'une opération de soudage. Ce procédé comporte les étapes de détection du fil de soudage 25 précédemment décrites.

Ce procédé pourra également comporter une étape d'affichage sur un écran d'une information relative à la longueur L de fil de soudage 25 détectée. Le procédé pourra comporter une étape d'enregistrement dans la mémoire 39 d'une information relative à la longueur L de fil détectée au cours d'une opération de soudage à des fins de traçabilité de soudage. En effet, un tel enregistrement pourra permettre de vérifier a posteriori la qualité de la soudure en fonction de l'évolution de la longueur du fil de soudage lors de l'opération de soudage.

Le procédé peut également comporter une étape de comparaison de la longueur L du fil de soudage 25 avec une valeur seuil minimale et /ou une valeur seuil maximale et une étape d'alerte dans le cas où la valeur de la longueur L du fil de soudage 25 devient inférieure à la valeur seuil minimale ou supérieure à la valeur seuil maximale.

Le procédé pourra également comporter une étape de pilotage du système de soudage 10 en asservissement par rapport à la longueur L de fil de soudage 25 détectée de façon à maintenir constante une longueur L de fil de soudage 25 tout au long d'une opération de soudage.

L'invention porte également sur le procédé de détection de l'extrémité libre d'un fil de soudage 25 en tant que tel. Plus précisément, l'invention a également pour objet un procédé de détection d'une extrémité libre d'un fil de soudage 25 dépassant d'une buse de soudage 24 appartenant à une torche de soudage 23 comportant en outre des moyens pour générer un arc de soudage 26 de façon à créer un bain de soudage 27, une caméra 37 étant apte à capter des images d'un ensemble E formé par la buse de soudage 24, le fil de soudage 25, l'arc de soudage 26, et le bain de soudage 27, ledit procédé comportant au moins les étapes suivantes :
- une étape de détection d'une région la plus lumineuse dans une image de l'ensemble en détectant des pixels de ladite image de l'ensemble dont une intensité est la plus forte,
- une étape de définition d'une zone de recherche du fil de soudage 25,
- une étape de détection du fil de soudage 25 par seuillage local dans la zone de recherche, et
- une étape de détection de l'extrémité libre dans le fil de soudage 25 précédemment détecté.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention telle que définies dans les revendications annexées.

## Revendications

1. Procédé de détection d'une longueur de fil de soudage (25) dépassant d'une buse de soudage (24) appartenant à une torche de soudage (23) comportant en outre des moyens pour générer un arc de soudage (26) de façon à créer un bain de soudage (27), une caméra (37) étant apte à capter des images d'un ensemble (E) formé par la buse de soudage (24), le fil de soudage (25), l'arc de soudage (26), et le bain de soudage (27), ledit procédé comportant :
- une étape de détection par traitement d'images d'une extrémité libre (42) du fil de soudage (25),
- une étape de détection par traitement d'images de la buse de soudage (24), et
- une étape de calcul d'une longueur (L) du fil de soudage (25) dépassant de la buse de soudage (24) par un calcul de distance euclidienne entre l'extrémité du fil de soudage (25) et la buse de soudage (24),
**caractérisé en ce que** l'étape de détection de l'extrémité libre (42) du fil de soudage (25) comporte:
- une étape de détection d'une région la plus lumineuse dans une image de l'ensemble (E) en détectant des pixels de ladite image de l'ensemble (E) dont une intensité est la plus forte,
- une étape de définition d'une zone de recherche (Z2) du fil de soudage (25),
- une étape de détection du fil de soudage (25) par seuillage local dans la zone de recherche (Z2), suivant laquelle l'ensemble des pixels de la zone de recherche (Z2) sont candidats, les pixels retenus étant ceux dont l'intensité est plus faible que ses voisins,
- une étape de détection de l'extrémité libre (42) dans le fil de soudage (25) précédemment détecté.

2. Procédé selon la revendication 1, **caractérisé en ce qu'**il comporte une étape préalable de rotation d'une image de l'ensemble (E) précité, de telle sorte qu'une direction de la buse de soudage (24) et du fil de soudage (25) est sensiblement verticale.

3. Procédé selon la revendication 1 ou 2, **caractérisé en ce qu'**il comporte en outre une étape préalable d'atténuation d'un bruit de capteur de la caméra (37) et d'effets de projections métalliques (41).

4. Procédé selon l'une quelconque des revendications 1 à 3, **caractérisé en ce que** l'étape de détection de la buse de soudage (24) comporte:
- une étape de calcul d'un gradient de l'image selon un axe (Y) de façon à mettre en évidence de fortes variations de l'intensité de pixels selon cet axe (Y),
- une étape de détection d'un bord inférieur (43) de la buse de soudage (24) correspondant à une zone la plus lumineuse de l'image résultant du calcul du gradient, et
- une étape de détection de la buse de soudage à partir du bord inférieur (43) de la buse de soudage (24).

5. Procédé selon la revendication 4, **caractérisé en ce qu'**il comporte une étape préalable de rotation d'une image de l'ensemble (E), de telle sorte qu'une direction de la buse de soudage (24) et du fil de soudage (25) est sensiblement verticale.

6. Procédé selon la revendication 4 ou 5, **caractérisé en ce qu'**il comporte une étape préalable d'atténuation d'un bruit de capteur de la caméra (37) et d'effets de projections métalliques (41).

7. Procédé de commande d'un système de soudage (10) à bras robotisé comportant les étapes du procédé de détection d'une longueur (L) de fil de soudage (25) tel que défini selon l'une quelconque des revendications 1 à 6.

8. Procédé selon la revendication 7, **caractérisé en ce qu'**il comporte en outre une étape d'affichage sur un écran d'une information relative à la longueur (L) de fil de soudage (25) détectée.

9. Procédé selon la revendication 7 ou 8, **caractérisé en ce qu'**il comporte une étape d'enregistrement dans une mémoire (39) d'une information relative à la longueur (L) de fil de soudage (25) détectée au cours d'une opération de soudage à des fins de traçabilité de soudage.

10. Procédé selon l'une quelconque des revendications 7 à 9, **caractérisé en ce qu'**il comporte une étape de comparaison de la longueur (L) du fil de soudage (25) détectée avec une valeur seuil minimale et/ou une valeur seuil maximale et une étape d'alerte dans le cas où la valeur de la longueur (L) du fil de soudage (25) devient inférieure à la valeur seuil minimale ou supérieure à la valeur seuil maximale.

11. Procédé selon l'une quelconque des revendications 7 à 10, **caractérisé en ce qu'**il comporte une étape de pilotage du système de soudage (10) en asservissement par rapport à la longueur (L) de fil de soudage (25) détectée de façon à maintenir constante une longueur (L) de fil de soudage (25) tout au long d'une opération de soudage.

12. Mémoire (39) stockant des instructions logicielles pour la mise en oeuvre du procédé de détection d'une longueur (L) de fil de soudage (25) tel que défini selon l'une quelconque des revendications 1 à 6.

## Patentansprüche

1. Verfahren zum Erfassen einer Länge eines Schweißdrahtes (25), der aus einer Schweißdüse (24) eines Schweißbrenners (23) herausragt, welcher weiterhin Mittel zum Erzeugen eines Schweißlichtbogens (26) umfasst, um ein Schweißbad (27) zu erzeugen, wobei eine Kamera (37) in der Lage ist, Bilder einer aus der Schweißdüse (24), dem Schweißdraht (25), dem Schweißlichtbogen (26) und dem Schweißbad (27) gebildeten Anordnung (E) aufzunehmen, wobei das Verfahren die folgenden Schritte umfasst:
- Erkennen eines freien Endes (42) des Schweißdrahtes (25) über eine Bildverarbeitung,
- Erkennen der Schweißdüse (24) über eine Bildverarbeitung, und
- Berechnen einer Länge (L) des Schweißdrahts (25), der aus der Schweißdüse (24) herausragt, durch Berechnen des euklidischen Abstands zwischen dem Ende des Schweißdrahts (25) und der Schweißdüse (24),
**dadurch gekennzeichnet, dass** der Schritt des Erkennens des freien Endes (42) des Schweißdrahtes (25) die folgenden Schritte umfasst:
- Erkennen eines hellsten Bereichs in einem Bild der Anordnung (E) durch Erkennen von Pixeln des Bildes der Anordnung (E), deren Intensität die höchste ist,
- Definieren einer Suchzone (Z2) im Schweißdraht (25),
- Erkennen des Schweißdrahts (25) durch lokale Schwellenwertbildung in der Suchzone (Z2), gemäß welcher alle Pixel in der Suchzone (Z2) Kandidaten sind, wobei die berücksichtigten Pixel eine geringer Intensität als ihre Nachbarn aufweisen,
- Erfassen des zuvor erfassten freien Endes (42) im Schweißdraht (25).

2. Verfahren nach Anspruch 1, **dadurch gekennzeichnet, dass** es einen Schritt des vorherigen Drehens eines Bilds der oben genannten Anordnung (E) umfasst, so dass eine Richtung der Schweißdüse (24) und des Schweißdrahts (25) im Wesentlichen vertikal ist.

3. Verfahren nach Anspruch 1 oder 2, **dadurch gekennzeichnet, dass** es außerdem einen Schritt des vorherigen Dämpfens von Sensorrauschen von der Kamera (37) und Metallprojektionseffekten (41) umfasst.

4. Verfahren nach einem der Ansprüche 1 bis 3, **dadurch gekennzeichnet, dass** der Schritt des Erkennens der Schweißdüse (24) die folgenden Schritte umfasst:
- Berechnen eines Gradienten des Bildes entlang einer Achse (Y), um starke Variationen in der Intensität von Pixeln entlang dieser Achse (Y) hervorzuheben,
- Erkennen einer Unterkante (43) der Schweißdüse (24), die einer hellsten Zone in dem aus der Berechnung des Gradienten resultierenden Bild entspricht, und
- Erfassen der Schweißdüse anhand der Unterkante (43) der Schweißdüse (24).

5. Verfahren nach Anspruch 4, **dadurch gekennzeichnet, dass** es einen Schritt des vorherigen Drehens eines Bildes der Anordnung (E) umfasst, so dass eine Richtung der Schweißdüse (24) und des Drahtschweißens (25) im Wesentlichen vertikal ist.

6. Verfahren nach Anspruch 4 oder 5, **dadurch gekennzeichnet, dass** es einen Schritt des vorherigen Dämpfens von Sensorrauschen von der Kamera (37) und Metallprojektionseffekten (41) umfasst.

7. Verfahren zum Steuern eines Schweißsystems (10) mit einem Roboterarm, das die Schritte des Verfahrens zum Erfassen einer Länge (L) eines Schweißdrahts (25) gemäß einem der Ansprüche 1 bis 6 umfasst.

8. Verfahren nach Anspruch 7, **dadurch gekennzeichnet, dass** es außerdem einen Schritt des Anzeigens von Informationen bezüglich der Länge (L) des erfassten Schweißdrahts (25) auf einem Bildschirm umfasst.

9. Verfahren nach Anspruch 7 oder 8, **dadurch gekennzeichnet, dass** es einen Schritt des Aufzeichnens von Informationen über die während eines Schweißvorgangs erfasste Länge (L) des Schweißdrahts (25) in einem Speicher (39) zum Zweck der Schweißverfolgung umfasst.

10. Verfahren nach einem der Ansprüche 7 bis 9, **dadurch gekennzeichnet, dass** es einen Schritt des Vergleichens der erfassten Länge (L) des Schweißdrahtes (25) mit einem minimalen Schwellenwert und/oder einem maximalen Schwellenwert und einen Alarmschritt für den Fall, dass der Wert der Länge (L) des Schweißdrahts (25) den minimalen Schwellenwert unterschreitet oder den maximalen Schwellenwert überschreitet, umfasst.

11. Verfahren nach einem der Ansprüche 7 bis 10, **dadurch gekennzeichnet, dass** es einen Schritt der automatischen Steuerung des Schweißsystems (10) basierend auf der erfassten Länge (L) des Schweißdrahtes (25) umfasst, um während eines Schweißvorgangs eine konstante Länge (L) des Schweißdrahts (25) aufrechtzuerhalten.

12. Speicher (39) zum Speichern von Softwarebefehlen zur Implementierung des Verfahrens zum Erfassen einer Länge (L) des Schweißdrahts (25) gemäß einem der Ansprüche 1 bis 6.

## Claims

1. A method for detecting a length of a welding wire (25) protruding from a welding nozzle (24) belonging to a welding torch (23) further comprising means for generating a welding arc (26) so as to create a welding bath (27), a camera (37) being able to capture images of an assembly (E) formed by the welding nozzle (24), the welding wire (25), the welding arc (26), and the welding bath (27), said method comprising:
- a step of detecting a free end (42) of the welding wire (25) via an image processing,
- a step of detecting the welding nozzle (24) via an image processing, and
- a step of calculating a length (L) of the welding wire (25) protruding from the welding nozzle (24) by calculating the Euclidean distance between the end of the welding wire (25) and the welding nozzle (24),
**characterized in that** the step of detecting the free end (42) of the welding wire (25) comprises:
- a step of detecting a brightest region in an image of the assembly (E) by detecting pixels of said image of the assembly (E) whose intensity is the highest,
- a step of defining a search zone (Z2) in the welding wire (25),
- a step of detecting the welding wire (25) by local thresholding in the search zone (Z2), according to which all of the pixels in the search zone (Z2) are candidates, the pixels retained being those whose intensity is lower than that of their neighbors,
- a step of detecting the free end (42) in the welding wire (25) previously detected.

2. The method according to Claim 1, **characterized in that** it comprises a step of previously rotating an image of the aforementioned assembly (E), such that a direction of the welding nozzle (24) and the welding wire (25) is substantially vertical.

3. The method according to Claim 1 or 2, **characterized in that** it further comprises a step of previously attenuating sensor noise from the camera (37) and metal projection effects (41).

4. The method according to any one of the claims 1 to 3, **characterized in that** the step of detecting the welding nozzle (24) comprises:
- a step of calculating a gradient of the image along an axis (Y) so as to highlight strong variations in the intensity of pixels along this axis (Y),
- a step of detecting a lower edge (43) of the welding nozzle (24) corresponding to a brightest zone in the image resulting from calculating the gradient, and
- a step of detecting the welding nozzle from the lower edge (43) of the welding nozzle (24).

5. The method according to Claim 4, **characterized in that** it comprises a step of previously rotating an image of the assembly (E), such that a direction of the welding nozzle (24) and the wire welding (25) is substantially vertical.

6. The method according to Claim 4 or 5, **characterized in that** it comprises a step of previously attenuating sensor noise from the camera (37) and metal projection effects (41).

7. A method for controlling a welding system (10) with a robotic arm comprising the steps of the method for detecting a length (L) of welding wire (25) as defined according to any one of the claims 1 to 6.

8. The method according to Claim 7, **characterized in that** it further comprises a step of displaying on a screen information relating to the length (L) of the welding wire (25) detected.

9. The method according to Claim 7 or 8, **characterized in that** it comprises a step of recording in a memory (39) information relating to the length (L) of the welding wire (25) detected during a welding operation for welding traceability purposes.

10. The method according to any one of the claims 7 to 9, **characterized in that** it comprises a step of comparing the length (L) of the welding wire (25) detected with a minimum threshold value and/or a maximum threshold value and an alert step in case the value of the length (L) of the welding wire (25) becomes inferior to the minimum threshold value or superior to the maximum threshold value.

11. The method according to any one of the claims 7 to 10, **characterized in that** it comprises a step of automatically controlling the welding system (10) on the basis of the length (L) of the welding wire (25) detected so as to maintain a constant length (L) of the welding wire (25) throughout a welding operation.

12. A memory (39) for storing software instructions for implementing the method for detecting a length (L) of the welding wire (25) as defined according to any one of the claims 1 to 6.
